# EUROPÄISCHE PATENTSCHRIFT

(11) **EP 1 461 156 B1**
(45) Veröffentlichungstag und Bekanntmachung des Hinweises auf die Patenterteilung: **02.01.2008**
(21) Anmeldenummer: 02793047.8
(22) Anmeldetag: 17.12.2002
(51) Int. Cl.: B01L 3/00, B01L 3/02

(54) **HYDROPHOBE OBERFLÄCHE MIT EINER VIELZAHL VON ELEKTRODEN**
HYDROPHOBIC SURFACE PROVIDED WITH A MULTITUDE OF ELECTRODES
SURFACE HYDROPHOBE COMPORTANT UNE PLURALITE D'ELECTRODES

(30) Priorität: 17.12.2001 DE 10162064
(43) Veröffentlichungstag der Anmeldung: 29.09.2004
(73) Patentinhaber: Qiagen GmbH, 40724 Hilden (DE)
(72) Erfinder: REIHS, Karsten, 50968 Köln (DE)
(74) Vertreter: Wolff, Felix
(86) Internationale Anmeldenummer: PCT/EP2002/014394
(87) Internationale Veröffentlichungsnummer: WO 2003/051515

(56) Entgegenhaltungen:
- EP-A- 1 136 819
- WO-A-99/54730
- DE-A- 19 847 421
- DE-A- 19 947 788

## Beschreibung

Die vorliegende Erfindung betrifft eine Lagerplatte und/oder Analysenplatte für kleinste Flüssigkeitstropfen, die eine nach oben offene ultraphobe Oberfläche und ein Raster von im wesentlichen gleichmäßig verteilten Elektroden aufweist, mit denen jeweils ein elektrisches Feld erzeugbar ist und die unterhalb der ultraphoben Oberfläche angeordnet sind.

Des weiteren betrifft die vorliegende Erfindung ein Verfahren zum Ablegen von Flüssigkeitstropfen, ein Verfahren zum Lokalisieren von Flüssigkeitstropfen, ein Verfahren zur Minimierung von Flüssigkeitsverlusten und von Stofftransportphänomenen, ein Verfahren zur Bestimmung der Größe eines Flüssigkeitstropfens und die Verwendung von ultraphoben Oberflächen zur Reduzierung von Flüssigkeitsverlusten und der Stofftransportphänomenen.

Im Bereich der Biotechnologie kommt der automatisierten chemischen und/oder biologischen Analyse einer Vielzahl kleinster Flüssigkeitstropfen, die ein Volumen in der Größenordnung von 10⁻¹² bis 10⁻⁶ Liter bzw. einen Durchmesser in der Größenordnung von ca. 0,01 bis 1 mm aufweisen, eine immer größere Bedeutung zu. Bei der Analyse wird der Flüssigkeitstropfen vorzugsweise in Luft gelagert, damit sich seine Konsistenz nicht durch Stoffaustausch mit Oberflächen, auf denen er aufliegt, verändert. Diese Luftlagerung ist jedoch nur sehr schwierig und kostenintensiv durchführbar.

Es war deshalb die Aufgabe der vorliegenden Erfindung, eine Vorrichtung zur Verfügung zu stellen, die die Nachteile des Standes der Technik nicht aufweist.

Gelöst wird die Aufgabe durch eine Lagerplatte und/oder Analysenplatte gemäß Patentanspruch 1.

Es war für den Fachmann überaus erstaunlich und nicht zu erwarten, daß es mit der erfindungsgemäßen Lagerplatte gelingt, kleinste Flüssigkeitstropfen zu lagern und zu analysieren ohne daß ein nennenswerter Stoffaustausch des Flüssigkeitstropfens mit der ultraphoben Fläche stattfindet. Die Flüssigkeitstropfen können an einem genau definierten Ort gelagert werden und sind demnach für ein Analysengerät leicht ansteuerbar. Die erfindungsgemäße Vorrichtung ist einfach und günstig herzustellen.

Ein Flüssigkeitstropfen im Sinne der Erfindung besteht aus einer beliebigen Flüssigkeit und weist bevorzugt ein Volumen von 10⁻¹² bis 10⁻⁶ Liter, insbesondere bevorzugt von 10⁻⁹ bis 10⁻⁵ Liter, auf.

Erfindungsgemäß weist die Vorrichtung eine nach oben offene ultraphobe Oberfläche auf. Eine ultraphobe Oberfläche im Sinne der Erfindung zeichnet sich dadurch aus, daß der Kontaktwinkel eines Wassertropfens, der an der Oberfläche liegt, mehr als 150° beträgt und der Abrollwinkel 10° nicht überschreitet. Als Abrollwinkel wird der Neigungswinkel einer grundsätzlich planaren aber strukturierten Oberfläche gegen die Horizontale verstanden, bei dem ein stehender Wassertropfen mit einem Volumen von 10 µl aufgrund der Schwerkraft bei einer Neigung der Oberfläche bewegt wird. Solche ultraphoben Oberflächen sind zum Beispiel in der WO 98/23549, WO 96/04123, WO 96/21523, WO 00/39369, WO 00/39368, WO00/39239, WO 00/39051, WO 00/38845 und WO 96/34697 offenbart.

In einer bevorzugten Ausführungsform weist die ultraphobe Oberfläche eine Oberflächentopographie auf, bei der die Ortsfrequenz der einzelnen Fourierkomponenten und deren Amplitude Aa (f) ausgedrückt durch das Integral S (log(f)) = a(f) • f errechnet zwischen den Integrationsgrenzen log (f₁/µm⁻¹) = -3 und log (f₁/µm⁻¹) = 3 mindestens 0,3 beträgt und die aus einem hydrophoben oder insbesondere oleophoben Material oder aus einem haltbar hydrophobierten oder insbesondere haltbar oleophobierten Material besteht. Eine solche ultraphobe Oberfläche ist in der internationalen Patentanmeldung WO 00/39240 beschrieben.

Weiterhin weist die erfindungsgemäße Vorrichtung ein Raster mit im wesentlichen gleichmäßig verteilten Elektroden auf, mit denen jeweils ein elektrisches Feld erzeugbar ist. Vorzugsweise weist das Raster mindestens 16x16=256, besonders bevorzugt mindestens 64x64=4096 und ganz besonders bevorzugt mindestens 256x256=65536 Elektroden auf. Die Elektroden sind jeweils individuell an eine elektrische Spannungsquelle mit vorzugsweise 10 bis 1000 V, besonders bevorzugt 100 bis 300 V, anschließbar, so daß mit jeder Elektrode unabhängig von den anderen Elektroden ein elektrisches Feld erzeugbar ist. Vorzugsweise sind die Elektroden in einem Abstand von <100 µm, besonders bevorzugt <50 µm und ganz bevorzugt <10 µm, angeordnet und weisen vorzugsweise eine Dimension ≤150 µm, besonders bevorzugt <70 µm und ganz besonders bevorzugt <20 µm, auf.

Vorzugsweise wird die Spannungsquelle von einer automatisierten Steuerungseinheit, beispielsweise einem Computer, gesteuert und die einzelnen Elektroden somit individuell mit elektrischer Spannung beaufschlagt. Mit dem Computer wird festgelegt, welche Elektrode zu welchem Zeitpunkt und über welchen Zeitraum mit elektrischer Spannung beaufschlagt wird. Dadurch kann der Ort festgelegt werden, an dem ein Flüssigkeitstropfen abgelegt wird. Die Ansteuerung der Elektroden durch die automatisierte Steuerungseinheit kann zu jedem Zeitpunkt verändert werden.

In einer bevorzugten Ausführungsform der vorliegenden Erfindung wird nicht nur eine sondern mehrere Elektroden, vorzugsweise mindestens zwei besonders bevorzugt mindestens vier Elektroden, gleichzeitig angesteuert. Bei der Ansteuerung von zwei Elektroden liegen diese vorzugsweise nebeneinander und bei einer Ansteuerung von vier Elektroden sind diese vorzugsweise in einem Carré angeordnet.

Erfindungsgemäß ist das Elektrodenraster unterhalb der ultraphoben Oberfläche angeordnet. Die ultraphobe Oberfläche wird erfindungsgemäß als Folie über das Elektrodenraster geklebt. Diese Ausführungsform hat den Vorteil, daß die Folie ausgetauscht werden kann, ohne daß der Träger und die Elektroden ersetzt werden müssen oder die Fläche gereinigt werden muß.

In einer bevorzugten Ausführungsform der vorliegenden Erfindung weist die Vorrichtung einen entfernbaren Deckel auf, so daß Verluste der Flüssigkeitstropfen, die sich auf der ultraphoben Fläche befinden, vermindert werden. Vorzugsweise weist die Vorrichtung zusätzlich ein Flüssigkeitsreservoir auf, das vorzugsweise mit einer Flüssigkeit gefüllt ist, die der Flüssigkeit der Flüssigkeitstropfen, die sich auf der ultraphoben Fläche befinden, möglichst ähnlich ist. Durch diese bevorzugte Ausführungsform der vorliegenden Erfindung werden Verluste der Flüssigkeitstropfen durch Verdunstung nahezu vermieden.

Ein weiterer Gegenstand der vorliegenden Erfindung ist ein Verfahren zum Ablegen von Flüssigkeitstropfen mit der erfindungsgemäßen Lagerplatte, bei dem :
- mit mindestens einer Elektrode ein elektrisches Feld erzeugt wird,
- jeweils ein Flüssigkeitstropfen auf der ultraphoben Fläche abgesetzt wird und
- der Flüssigkeitstropfen durch das elektrische Feld fixiert wird.

Durch das erfindungsgemäße Verfahren ist es möglich, eine Vielzahl von kleinsten Flüssigkeitstropfen beispielsweise für eine automatisierte Analyse oder auch nur zur Lagerung auf einer Vorrichtung mit einer ultraphoben Oberfläche dauerhaft jedoch reversibel zu lagern. Die Flüssigkeitstropfen befinden sich an einem eindeutig definierten Punkt, so daß es beispielsweise für eine Analysenvorrichtung sehr einfach möglich ist, die Flüssigkeitstropfen anzusteuern und Proben zu entnehmen oder diesen berührungslos zu analysieren.

In einer bevorzugten Ausführungsform des erfindungsgemäßen Verfahrens wird der Tropfen durch eine Dosierpumpe auf die ultraphobe Oberfläche gespritzt und von dem elektrischen Feld, das durch mindestens eine Elektrode des Rasters erzeugt worden ist, angezogen.

Vorzugsweise werden mehrere Flüssigkeitstropfen an jeweils unterschiedlichen Orten auf der ultraphoben Oberfläche abgelegt.

Vorzugsweise werden die Flüssigkeitstropfen vor und/oder nach dem Ablegen gemischt, gereinigt, vereinigt und/oder getrennt. Weiterhin bevorzugt werden die Flüssigkeitstropfen eingedampft.

Ein weiterer Gegenstand der vorliegenden Erfindung ist ein Verfahren zum Lokalisieren von Flüssigkeitstropfen mit der erfindungsgemäßen Vorrichtung bei dem die elektrische Spannung zwischen jeweils zwei Elektroden in der Umgebung des Flüssigkeitstropfens vorzugsweise periodisch verändert wird und dabei die unterschiedliche Änderung der Ströme sowie die Phasenverschiebung zwischen der periodischen Spannungsänderung und der Stromänderung gemessen wird. Bei den Elektroden, die sich in der unmittelbaren Nähe eines Flüssigkeitstropfens befinden, wird der Strom höher sein als bei den übrigen Elektroden, so daß es möglich ist, anhand dieser Messungen die genaue Position eines Flüssigkeitstropfens zu lokalisieren. Der Fachmann erkennt, daß je feiner das Elektrodenraster ausgebildet ist, eine um so genauere Lokalisierung der Flüssigkeitstropfen erfolgen kann.

Durch die genaue Bestimmung der Koordinaten eines Flüssigkeitstropfens können dorthin schnell und genau Analyseninstrumente positioniert werden bzw. falls Flüssigkeitstropfen vereint werden müssen, kann ein zweiter Tropfen genau zu der Position des ersten Tropfens bewegt werden.

Durch die genaue Bestimmung der Position eines Flüssigkeitstropfens können dorthin schnell und genau Analyseninstrumente positioniert werden bzw. falls Flüssigkeitstropfen vereint werden müssen, kann ein zweiter Tropfen genau zu der Position des ersten Tropfens bewegt werden.

Ein zusätzlicher Gegenstand der vorliegenden Erfindung ist ein Verfahren zur Bestimmung der Größe eines Flüssigkeitstropfens mit der erfindungsgemäßen Vorrichtung, bei dem die elektrische Spannung zwischen je zwei Elektroden im Bereich des Flüssigkeitstropfens vorzugsweise periodisch verändert wird und dabei die Änderung der Ströme gemessen wird. Das Größe der Änderung des Stromes zwischen den Paaren von je zwei Elektroden, sowie die Phasenverschiebung zwischen der periodischen Spannungsänderung und der Stromänderung ist ein Maß für die Größe des Tropfens, da die Ströme um so größer sind, je größer das Volumen des Flüssigkeitstropfens ist, das zwischen den Elektroden während der Messung liegt.

Mit dem erfindungsgemäßen Verfahren ist es möglich, die Größe eines Tropfens und damit dessen Volumen genau zu bestimmen. Dies kann für die Auswertung einer Analyse oder für das Mischen mehrerer Tropfen in einem ganz bestimmten Verhältnis von großer Bedeutung sein.

Mit dem erfindungsgemäßen Verfahren ist es möglich, die Größe eines Tropfens und damit dessen Volumen genau zu bestimmen. Dies kann für die Auswertung einer Analyse oder für das Mischen mehrerer Tropfen in einem ganz bestimmten Verhältnis von großer Bedeutung sein.

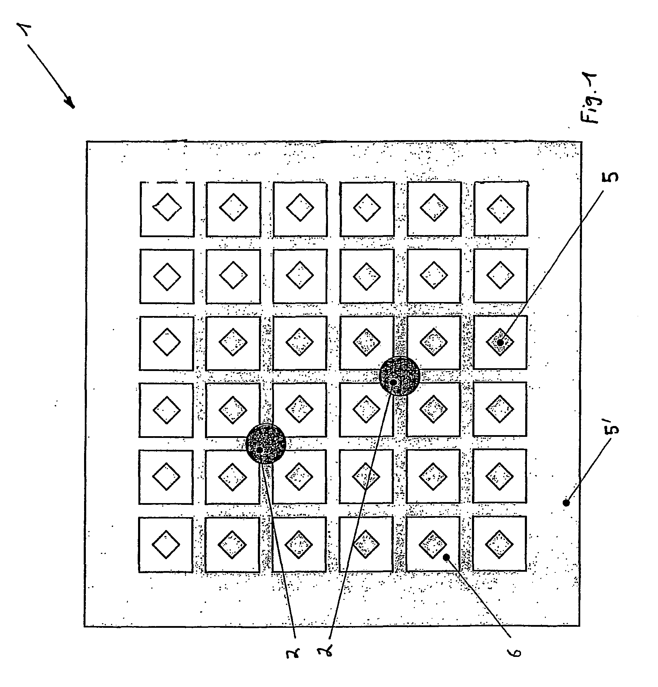

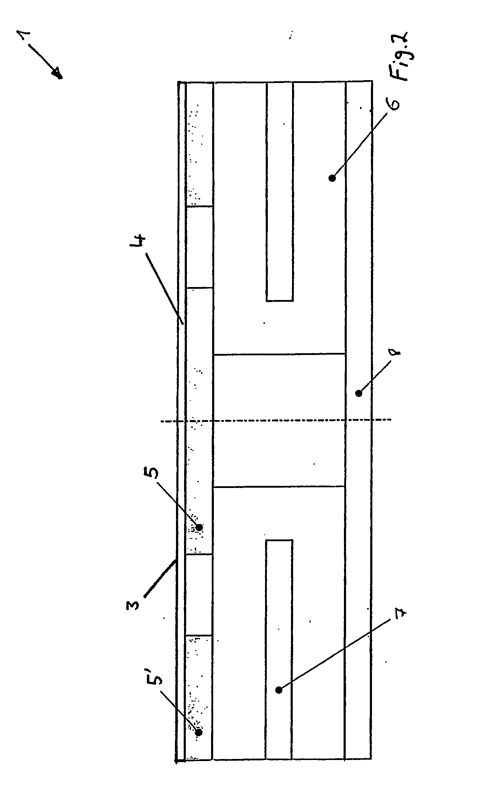

Im folgenden wird die Erfindung anhand der **Figuren 1 und 2** erläutert. Diese Erläuterungen sind lediglich beispielhaft und schränken den allgemeinen Erfindungsgedanken nicht ein.

**Figur 1** zeigt die erfindungsgemäße Vorrichtung in Draufsicht.

**Figur 2** zeigt einen Schnitt durch eine Elektrode in der erfindungsgemäßen Vorrichtung.

**Figur 1** zeigt die erfindungsgemäße Vorrichtung 1, die in dem vorliegenden Fall 36 Elektroden 5 und eine Gegenelektrode 5' aufweist. Die Elektroden sind in einem gleichmäßigen Raster angeordnet. Der Abstand der Elektroden beträgt 450µm, die Kantenlänge der quadratischen Elektroden beträgt 150µm. Jeweils vier Elektroden 5 werden in dem vorliegenden Beispiel von einem Computer gleichzeitig mit einer Spannung von 85 V angesteuert, so daß sich ein Flüssigkeitstropfen an den Spitzen von jeweils vier Elektroden anordnet. Die Elektroden werden von einer Folie 4 abgedeckt, die eine ultraphobe Oberfläche 3 aufweist. Die ultraphobe Oberfläche ist in dem vorliegenden Fall eine Oberfläche auf der ein Tropfen einen Randwinkel von 174° und einen Abrollwinkel von 3° aufweist.

**Figur 2** zeigt einen Schnitt durch eine Elektrode. Die Elektrode besteht aus einer Elektrode 5 und einer Gegenelektrode 5'. Des weiteren sind im Bereich der Elektrode ein dielektrisches Material 6 und eine Schirmung 7 angeordnet. In der Mitte weist die Elektrode eine Anschlußmöglichkeit 8 auf, mit der sie mit einer Spannungsquelle (nicht dargestellt) verbunden ist, die durch einen Computer (nicht dargestellt) gesteuert wird.

## Patentansprüche

1. Lagerplatte und/oder Analysenplatte (1) für kleinste Flüssigkeitstropfen (2), die eine nach oben offene ultraphobe Oberfläche (3) und ein Raster (4) von im wesentlichen gleichmäßig verteilten Elektroden (5) aufweist, mit denen jeweils ein elektrisches Feld erzeugbar ist und die unterhalb der ultraphoben Oberfläche angeordnet sind, **dadurch gekennzeichnet, dass** die ultraphobe Oberfläche eine selbstklebende Folie ist.

2. Lagerplatte nach Anspruch 1, **dadurch gekennzeichnet, dass** an jede Elektrode individuell an eine Spannungsquelle anschließbar ist.

3. Lagerplatte nach Anspruch 1 oder 2, **dadurch gekennzeichnet, dass** mehrere Elektroden gleichzeitig an mindestens eine Spannungsquelle anschließbar sind.

4. Lagerplatte nach einem der Ansprüche 1 - 3, **dadurch gekennzeichnet, dass** .. an mindestens eine Elektrode eine so hohe Spannung angelegt wird, dass ein Flüssigkeitstropfen dauerhaft jedoch reversibel oberhalb der Elektrode lokalisierbar ist.

5. Lagerplatte nach einem der vorhergehenden Ansprüche, **dadurch gekennzeichnet, dass** die Elektroden in einem Anstand von ≤ 100 µm angeordnet sind und dass ihre größte Dimension vorzugsweises 150 µm ist.

6. Lagerplatte nach einem der vorhergehenden Ansprüche, **dadurch gekennzeichnet, dass** die ultraphobe Oberfläche eine Oberflächentopographie aufweist, bei der die Ortsfrequenz f der einzelnen Fourierkomponenten und deren Amplituden a(f) ausgedrückt durch das Integral S(log (f)) = a(f) • f errechnet zwischen den Integrationsgrenzen log (f₁/µm⁻¹) = -3 und log (f₁/µm⁻¹) = 3, mindestens 0,3 beträgt und die aus ultraphoben Polymeren oder haltbar ultraphoben Materialien besteht.

7. Lagerplatte nach einem der vorhergehenden Ansprüche, **dadurch gekennzeichnet, dass** sie ein Flüssigkeitsreservoir aufweist.

8. Lagerplatte nach einem der vorhergehenden Ansprüche, **dadurch gekennzeichnet, dass** sie einen entfernbaren Deckel aufweist.

9. Verfahren zum Ablegen von Flüssigkeitstropfen mit einer Vorrichtung gemäß einem der Ansprüche 1 - 8, **dadurch gekennzeichnet, dass**:
- mit mindestens einer Elektrode ein elektrisches Feld erzeugt wird,
- jeweils ein Flüssigkeitstropfen auf der ultraphoben Oberfläche gespritzt wird und
- der Flüssigkeitstropfen durch das elektrische Feldes fixiert wird.

10. Verfahren nach Anspruch 9, **dadurch gekennzeichnet, dass** der Tropfen von dem elektrischen Feld angezogen wird.

11. Verfahren nach Anspruch 9 oder 10, **dadurch gekennzeichnet, dass** mehrere Flüssigkeitstropfen an jeweils unterschiedlichen Orten auf der ultraphoben Oberfläche abgelegt werden.

12. Verfahren nach einem der Anprüche 9-11, **dadurch gekennzeichnet, dass** die Flüssigkeitstropfen vor oder nach dem Ablegen gemischt, vereinigt, und/oder getrennt werden.

13. Verfahren zum Lokalisieren von Flüssigkeitstropfen mit einer Vorrichtung gemäß einem der Ansprüche 1 - 8, **dadurch gekennzeichnet, dass** die elektrische Spannung zwischen jeweils zwei der Elektroden in der Umgebung eines Flüssigkeitstropfens vorzugsweise periodisch geändert und dabei die unterschiedliche Änderung der Ströme und vorzugsweise die Phasenverschiebung zwischen der periodischen Spannungs- und der Stromänderung gemessen wird.

14. Verfahren zur Bestimmung der Größe eines Flüssigkeitstropfens mit einer Vorrichtung gemäß einem der Ansprüche 1 - 7, **dadurch gekennzeichnet, dass** die elektrische Spannung zwischen jeweils zwei der Elektroden in der Umgebung eines Flüssigkeitstropfens vorzugsweise periodisch geändert und dabei die unterschiedliche Änderung der Ströme und vorzugsweise die Phasenverschiebung zwischen der periodischen Spannungs- und der Stromänderung gemessen wird, die ein Maß für die Größe des Tropfens ist.

## Claims

1. Bearing plate and/or analytical plate (1) for extremely small liquid droplets (2), said plate having an upwardly open ultraphobic surface (3) and a grid (4) of essentially uniformly distributed electrodes (5) which can each be used to generate an electrical field and are arranged under the ultraphobic surface, **characterized in that** the ultraphobic surface is a self-adhesive film.

2. Bearing plate according to Claim 1, **characterized in that** each electrode can be individually connected to a voltage source.

3. Bearing plate according to Claim 1 or 2, **characterized in that** a plurality of electrodes can be simultaneously connected to at least one voltage source.

4. Bearing plate according to one of Claims 1-3, **characterized in that** such a high voltage is applied to at least one electrode that a liquid droplet can be permanently but reversibly located above the electrode.

5. Bearing plate according to one of the preceding claims, **characterized in that** the electrodes are arranged at a distance of ≤ 100 µm and their largest dimension is preferably ≤ 150 µm.

6. Bearing plate according to one of the preceding claims, **characterized in that** the ultraphobic surface has a surface topography in which the spatial frequency f of the individual Fourier components and their amplitudes a(f), expressed by the integral S(log(f))=a(f)•f calculated between the integration limits log(f₁/µm⁻¹)=-3 and log(f₁/µm⁻¹)=3, is at least 0.3, and which comprises ultraphobic polymers or durably ultraphobic materials.

7. Bearing plate according to one of the preceding claims, **characterized in that** it has a liquid reservoir.

8. Bearing plate according to one of the preceding claims, **characterized in that** it has a removable cover.

9. Method for depositing liquid droplets using an apparatus according to one of Claims 1-8, **characterized in that**:
- an electrical field is generated using at least one electrode,
- a liquid droplet is respectively sprayed onto the ultraphobic surface, and
- the liquid droplet is fixed by the electrical field.

10. Method according to Claim 9, **characterized in that** the droplet is attracted by the electrical field.

11. Method according to Claim 9 or 10, **characterized in that** a plurality of liquid droplets are deposited at respective different locations on the ultraphobic surface.

12. Method according to one of Claims 9-11, **characterized in that** the liquid droplets are mixed, combined and/or separated before or after being deposited.

13. Method for locating liquid droplets using an apparatus according to one of Claims 1-8, **characterized in that** the electrical voltage between in each case two of the electrodes in the area surrounding a liquid droplet is preferably changed periodically and the different change in the currents and preferably the phase shift between the periodic voltage change and the current change are measured in the process.

14. Method for determining the size of a liquid droplet using an apparatus according to one of Claims 1-7, **characterized in that** the electrical voltage between in each case two of the electrodes in the area surrounding a liquid droplet is preferably changed periodically and the different change in the currents and preferably the phase shift between the periodic voltage change and the current change are measured in the process, this being a measure of the size of the droplet.

## Revendications

1. Plaquette de support et/ou plaquette d'analyse (1) pour de très petites gouttes de liquide (2), qui présente une surface (3) ultraphobe ouverte vers le haut et une grille (4) d'électrodes (5) réparties substantiellement uniformément, avec lesquelles un champ électrique peut être à chaque fois produit, et qui sont disposées sous la surface ultraphobe,
**caractérisée en ce que** la surface ultraphobe est un film auto-adhésif.

2. Plaquette de support selon la revendication 1, **caractérisée en ce que** l'on peut raccorder chaque électrode individuelle à une source de tension.

3. Plaquette de support selon la revendication 1 ou 2, **caractérisée en ce que** plusieurs électrodes peuvent être raccordées en même temps à au moins une source de tension.

4. Plaquette de support selon l'une quelconque des revendications 1 à 3, **caractérisée en ce que** l'on applique sur au moins une électrode une tension telle qu'une goutte de liquide puisse être localisée de manière durable mais réversible au-dessus de l'électrode.

5. Plaquette de support selon l'une quelconque des revendications précédentes, **caractérisée en ce que** les électrodes sont disposées à une distance de ≤ 100 µm et que leur dimension maximale est de préférence ≤ 150 µm.

6. Plaquette de support selon l'une quelconque des revendications précédentes, **caractérisée en ce que** la surface ultraphobe présente une topographie de surface dans laquelle la fréquence locale f des composantes individuelles de Fourier et de leurs amplitudes a(f), exprimée par l'intégrale S(log(f))=a(f)*f et calculée entre les limites d'intégration log(f₁/µm⁻¹)= -3 et log(f₁/µm⁻¹)= 3, vaut au moins 0,3 et se compose de polymères ultraphobes ou de matériaux ultraphobes de manière durable.

7. Plaquette de support selon l'une quelconque des revendications précédentes, **caractérisée en ce qu'**elle présente un réservoir de liquide.

8. Plaquette de support selon l'une quelconque des revendications précédentes, **caractérisée en ce qu'**elle présente un couvercle amovible.

9. Procédé pour déposer des gouttes de liquide, comprenant un dispositif selon l'une quelconque des revendications 1 à 8, **caractérisé en ce que** :
- un champ électrique est produit avec au moins une électrode,
- une goutte de liquide est à chaque fois injectée sur la surface ultraphobe et
- la goutte de liquide est fixée par le champ électrique.

10. Procédé selon la revendication 9, **caractérisé en ce que** la goutte est attirée par le champ électrique.

11. procédé selon la revendication 9 ou 10, **caractérisé en ce que** plusieurs gouttes de liquide sont déposées en des endroits à chaque fois différents sur la surface ultraphobe.

12. Procédé selon l'une quelconque des revendications 9 à 11, **caractérisé en ce que** les gouttes de liquide sont mélangées, réunies et/ou séparées avant ou après avoir été déposées.

13. Procédé pour localiser des gouttes de liquide, comprenant un dispositif selon l'une quelconque des revendications 1 à 8, **caractérisé en ce que** la tension électrique entre à chaque fois deux des électrodes dans l'environnement d'une goutte de liquide est de préférence modifiée périodiquement et en l'occurrence on mesure la variation différente des courants et de préférence le décalage de phase entre la variation de tension périodique et la variation de courant.

14. Procédé pour déterminer la taille d'une goutte de liquide, comprenant un dispositif selon l'une quelconque des revendications 1 à 7, **caractérisé en ce que** la tension électrique entre à chaque fois deux des électrodes respectives est modifiée de préférence périodiquement dans l'environnement d'une goutte de liquide et en l'occurrence on mesure la variation différente des courants et de préférence le décalage de phase entre la variation de tension périodique et la variation de courant qui est une mesure de la taille de la goutte.
